# EUROPEAN PATENT SPECIFICATION

(11) **EP 3 068 661 B1**
(45) Date of publication and mention of the grant of the patent: **22.07.2020**
(21) Application number: 14728665.2
(22) Date of filing: 22.04.2014
(51) Int. Cl.: B60N 2/18, B60N 2/22, B60N 2/24

(54) **MASS TRANSIT VEHICLE CHAIR**
SITZ ÖFFENTLICHER TRANSPORTMITTEL
SIÈGE DE VEHICULES DE TRANSPORT EN COMMUN

(30) Priority: 15.11.2013 PL 40608913
(43) Date of publication of application: 21.09.2016
(73) Proprietor: Szymanski, Maciej, 62-090 Rokietnica (PL)
(72) Inventor: Szymanski, Maciej, 62-090 Rokietnica (PL)
(74) Representative: Luczak, Jerzy
(86) International application number: PCT/PL2014/000042
(87) International publication number: WO 2015/072867

(56) References cited:
- EP-A1- 1 346 872
- FR-A1- 2 569 628

## Description

The subject of the invention if a mass transit vehicle chair, to be used in buses, vans, railway cars, aircraft and as seats of truck drivers, where it is necessary to change the position of the seat and backrest in the process of direct use by the passenger.

When constructing vehicle chairs, it is very important to establish the theoretical "H" point for each chair. This is a point which lies approximately at the height of the passenger's hip joint. The parameters of the chair, such as the length of the seat, backrest angle and anchoring points of safety belts are established in relation to this point. This point determines the construction of the entire chair. For each movement of the "H" point independent studies of chair structure should be conducted. Incorrectly adapted chair parameters in relation to the "H" point may result in the passenger sliding out from the seat belts during sudden braking, with all the negative consequences thereof.

Long distance mass transit passenger chairs are known, where the seat is permanently placed in the base, and the backrest may be reclined by the placement of the backrest frame on the axis in the lower frame zone.

Also chairs are known, where the seat frame and backrest frame are rigidly connected, whereas the movement of the seat and backrest when inclining the backrest has the same angle or a different backrest inclination angle, but with a simultaneous movement of the seat forward.

The negative aspect of this movement is the spatial movement of "H" point within space.

In the PL 211142 B1 patent description a chair with a variable seat inclination is presented, used in vehicles, offices and where a frequent change of seat position is required to adapt to the user's needs. The chair is characterised by the seat frame being placed on side connectors, mounted to the support mechanism in such a manner that the axis of rotation of the bolt, on which the seat frame is mounted is located approximately in a vertical axis, passing through the user's centre of gravity and is placed by the locking mechanism with a lock.

In the PL 205230 B1 patent description a variable backrest inclination vehicle chair is presented, used in long distance passenger transport vehicles. The chair is characterised by the fact that the frame, with shaped arms located in the recesses on the seat, placed on bolts mounted in supports, permanently connected with the base, whereas the ends of the arms are connected to the base with a connector.

It is known from French application FR 2569628 A1 the vehicle seat, which comprises: a seat frame a seat frame whose rear end portion is pivotally attached to a vehicle floor such that its front end portion can be raised and lowered, a backrest frame coupled to the rear end portion of the seat frame so as to be rotatable longitudinally; two linkage elements having a first end portion pivotally connected to a support piece on the right, respectively left, provided on the floor, and which are also engaged, at their central portion, with the front half-section of the seat frame; and a connecting bar for connecting the backrest frame with a second end portion linkage elements.

It is known from European application EP 1346872 A1 the vehicle seat with a seat surface and a backrest, which is pivotable about a transverse to the seat axis, preferably from an upright sitting position to an inclined rest position is pivotable, and with a height-adjustable via a height-adjusting head restraint, which has a top through an opening in the backrest engaging head cushion support and a head cushion, characterized in that the backrest an automatically operated tilt adjustment which is designed to adjust the headrest in a freely selectable position with the inclination adjustment within the backrest and the head cushion support by a in the backrest and arranged transversely to the seat surface extending pivot axis pivots.

The essence of the invention, which is a mass transit vehicle chair in the form of a seat, placed rotationally on a base and a rotationally placed reclining backrest on said base, with a given point "H" for said seat, wherein said base is permanently mounted to a floor and has a first horizontal axis perpendicular to the longitudinal axis of the vehicle on which a frame of said seat is rotationally placed, said frame is having in its front zone an axis mounted to an upper support which is connected by a common axis with a lower support which is placed in an articulated manner on an axis in said base, whereas both supports are connected at said common axis with one end of a pull rod, said pull rod is connected at an opposite end to an articulated joint at a lower arm of a backrest frame, said backrest frame is placed on a second horizontal axis which is placed on elements of said bas in parallel to said first horizontal axis, characterised in that said first horizontal axis is located at a distance "a" within 0.5 to 0.7, advantageously 0.6 of the length "A" of said frame of said seat from the front edge of said seat and said second horizontal axis is located at a distance "b" within 0.05 to 0.15, advantageously 0.1 of the length "B" of said brackerst frame of the reclining backrest from the lower edge of said backrest frame of the reclining backrest.

The use of the solution presented in the invention enables the following technical and utility effects:
- combination of the movement of raising the front of the seat and lowering the back of the seat with the backrest reclining movement.
- performing actions of changing the location of the seat and the backrest with one movement,
- the use of a single locking mechanism to change the location of the seat and chair,
- keeping the "H" point in the same area, which eliminates the necessity of conducting a cycle of studies for various locations of the seat,
- constant distance of the front edge of the seat from the chair mounted in front of it,
- possibility of moving the seat and backrest by any angle within the range of limiting values,
- possibility of changing the seat frame inclination angle other than the backrest frame inclination angle,
- reducing the unit weight by elimination of one locking mechanism,
- reducing the costs of construction.

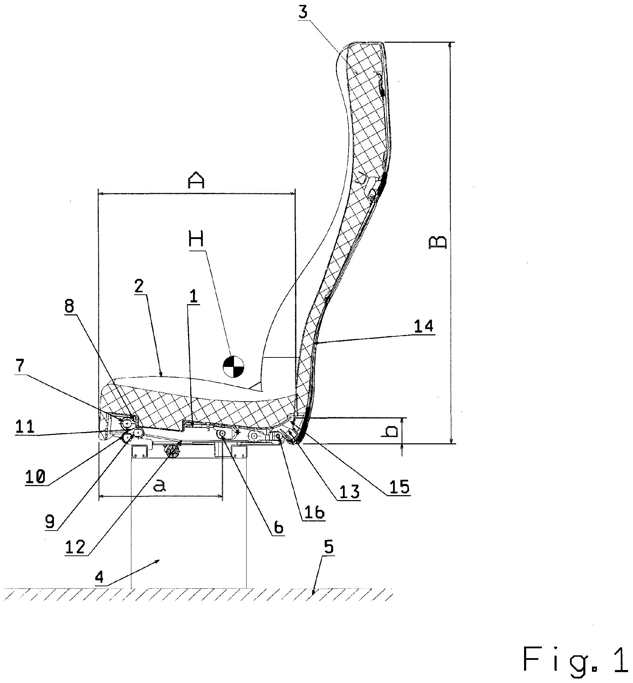

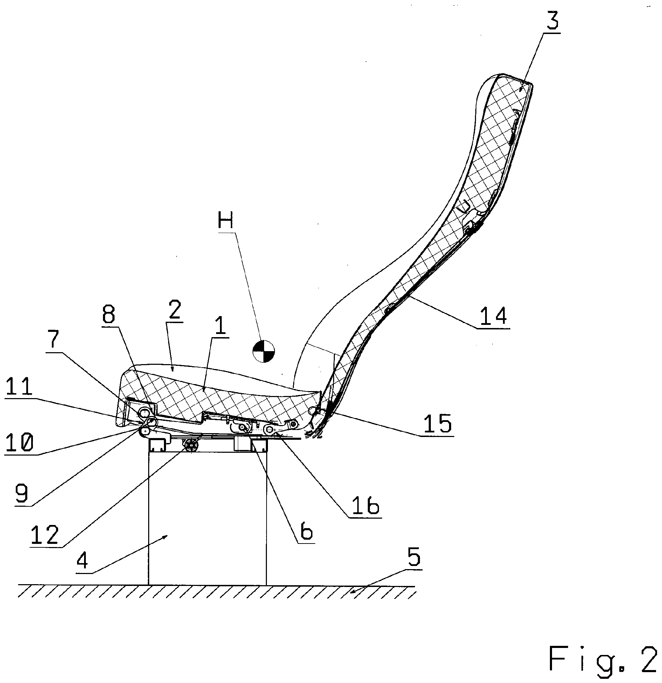

The subject of the invention, in an example, but not limiting, implementation was presented in diagrams on the figure, where on fig. 1 the chair is presented in the position where the backrest is approximately vertical, and on fig. 2 the chair is presented in reclined backrest position, whereas on both figures additionally the theoretical "H" point is marked.

The mass transit chair is composed of a seat 2 placed rotationally on frame 1 and a rotationally placed, reclined backrest 3. The chair has a base 4 fixed permanently to the floor 5. On the base 4, on the first horizontal axis 6, perpendicular to the longitudinal axis of the vehicle, the frame 1 of the seat 2 is placed. To the frame 1 in its front zone the axis 7 mounted to the upper support 8 which is connected by the common axis 9 with a lower support 11 which is placed in an articulated manner on the axis 10 in the base 4. The upper support 8 and the lower support 11 on a common axis 9 are connected by a pull rod 12 end to an articulated joint 16 at the lower arm 13 of the backrest frame 14 of the reclining backrest 3. A reclining backrest 3 is placed on a horizontal axis 15, parallel to the first horizontal axis 6 of placement of frame 1 of the seat 2, at a constant distance from the characteristic point "H", near which the centre of gravity of the passenger in a normal sitting position is located. Chair base 4 elements are placed on the chair frame placement axis 6.

The first horizontal axis 6 of the placement of frame 1 of the seat 2 is located at a distance "a" within 0.5 to 0.7, advantageously 0.6 of the length "A" of the frame 1 of the seat 2 from the front edge of the seat 2.

The second horizontal axis 15 of the placement of frame 14 of the reclining backrest 3 is placed at a distance "b" within 0.05 to 0.15, advantageously 0.1 of the height "B" of the backrest frame 14 of the reclining backrest 3 from the lower edge of the backrest frame 14 of the reclining backrest 3.

The chair in the position with the reclining backrest 3 placed approximately vertically, has a seat 2 placed on frame 1, supported on the firs horizontal axis 6 and axis 7, whereas frame 1 has an approximately horizontal position. The natural shape of seat 2 will result in its shape being lowered towards the zone of connection with the reclining backrest 3.

Release of the lock, not presented on the figure, and pressing the reclining backrest 3 towards the back will result in the backrest frame 14 of the reclining backrest 3 moving on the second horizontal axis 15, resulting in the movement towards the front of the lower arm 13 of the backrest frame 14. This will also cause the movement of the articulated joint 16 and pull rod 12 towards the front. A reciprocal movement of the lower support 11 and upper support 8 will occur. Due to the placement of the lower support 11 by one end in the axis 10 in the base 4 of the chair, an upwards movement of the axis 7 of the upper support 8 will occur. Frame 1 of the chair will rotate by between ten and twenty degrees in relation to the first horizontal axis 6, lowering the back part of the seat 2 and raising the front part of the seat 2.

In the established position of the seat 2 and the reclining backrest 3 the position lock is closed.

Return of the seat 2 and the reclining backrest 3 to its primary position will occur after the lock is released. Then the reclining backrest 3, when its upper part is moving towards the front, will result in the lower arm 13 of the backrest frame 14 of the reclining backrest 3 will move the pull rod 12 and the common axis 9 towards the back. The axis 7 of the frame 1 will move downwards, resulting in the rotation of the seat 2 of the frame 1 around the first horizontal axis 6, thus lowering the front part of the seat 2, and raising the rear part of the seat 2. After this action the position of elements is locked.

There is a possibility of using the same functions of reciprocal movement of the seat 2 and the reclining backrest 3 by raising the front part of the seat 2 upwards, or in a reverse case, pressing down on the front part of the seat 2. The kinematic system of connecting the seat 2 with the reclining backrest 3 will result in the same movement as described above.

## Claims

1. A mass transit vehicle chair in the form of a seat (2), placed rotationally on a base (4) and a rotationally placed reclining backrest (3) on said base (4), with a given point "H" for said seat, wherein said base (4) is permanently mounted to a floor (5), and has a first horizontal axis (6) perpendicular to the longitudinal axis of the vehicle on which a frame (1) of said seat (2) is rotationally placed, said frame (1) is having in its front zone an axis (7) mounted to an upper support (8) which is connected by a common axis (9) with a lower support (11) which is placed in an articulated manner on an axis (10) in said base (4), whereas both supports (8, 11) are connected at said common axis (9) with one end of a pull rod (12), said pull rod (12) is connected at an opposite end to an articulated joint (16) at a lower arm (13) of a backrest frame (14), said backrest frame (14) is placed on a second horizontal axis (15) which is placed on elements of said base (4) in parallel to said first horizontal axis (6), said first horizontal axis (6) is located at a distance "a" within 0.5 to 0.7, advantageously 0.6 of the length "A" of said frame (1) of said seat (2) from the front edge of said seat (2) and said second horizontal axis (15) is located at a distance "b" within 0.05 to 0.15, advantageously 0.1 of the length "B" of said backrest frame (14) of the reclining backrest (3) from the lower edge of said backrest frame (14) of the reclining backrest (3).

## Patentansprüche

1. Ein Nahverkehrsfahrzeugsitz in Form eines drehbar auf einem Unterbau (4) platzierten Sitzes (2) sowie einer auf genanntem Unterbau (4) angebrachten verstellbaren Rückenlehne (3) mit einem für den genannten Sitz vorgegebenen Punkt "H", wobei der genannte Unterbau (4) feststehend am Unterboden (5) befestigt ist und eine erste horizontale Achse (6), die senkrecht zur Längsachse des Fahrzeugs, in dem ein Rahmen (1) des genannten Sitzes (2) drehbar platziert ist, aufweist und der genannte Rahmen (1) in seiner Vorderzone über eine Achse (7) verfügt, die an einer oberen Stütze (8) befestigt ist, die über eine gemeinsame Achse (9) mit einer unteren Stütze (11) verbunden ist, die beweglich auf einer Achse (10) im genannten Unterbau (4) platziert ist, wobei beide Stützen (8, 11) an der gemeinsamen Achse (9) mit dem Auslauf einer Zugstange (12) verbunden sind und die genannte Zugstange (12) am entgegengesetzten Ende mit einem Gelenk (16) an einem unteren Arm (13) eines Rückenlehnrahmens (14) verbunden ist und der genannte Rückenlehnrahmen (14) auf einer zweiten horizontalen Achse (15) platziert ist, die auf Elementen des genannten Unterbaus (4) parallel zur genannten ersten horizontalen Achse (6) platziert ist und sich die genannte erste horizontale Achse (6) in einem Abstand "a" innerhalb des 0,5- bis 0,7-fachen, vorteilhafterweise des 0,6-fachen der Länge "A" des genannten Rahmens (1) des genannten Sitzes (2) von der Vorderkante des genannten Sitzes (2) befindet und sich die genannte zweite horizontale Achse (15) in einem Abstand "b" innerhalb des 0,05- bis 0,15-fachen, vorteilhafterweise des 0,1-fachen der Länge "B" des genannten Rücklehnrahmens (14) der verstellbaren Rückenlehne (3) von der Unterkante des genannten Rückenlehnrahmens (14) der verstellbaren Rückenlehne (3) befindet.

## Revendications

1. Siège de véhicule de transport en commun sous la forme d'un siège (2), placé en rotation sur une base (4) et d'un dossier inclinable (3) placé en rotation sur ladite base (4), avec un point "H" donné pour ledit siège, dans lequel ladite base (4) est montée de manière permanente sur un plancher (5), et présente un premier axe horizontal (6) perpendiculaire à l'axe longitudinal du véhicule sur lequel un châssis (1) dudit siège (2) est placé en rotation, châssis (1) qui présente dans sa zone avant un axe (7) monté sur un support supérieur (8) relié par un axe commun (9) à un support inférieur (11) placé de manière articulée sur un axe (10) dans ladite base (4), tandis que les deux supports (8, 11) sont reliés audit axe commun (9) à une extrémité d'une tige de traction (12) reliée à une extrémité opposée à une articulation (16) à un bras inférieur (13) d'un cadre de dossier (14) placé sur un second axe horizontal (15) placé sur des éléments de ladite base (4) parallèlement audit premier axe horizontal (6), lequel premier axe horizontal (6) est situé à une distance "a" à l'intérieur de 0. 5 à 0,7, avantageusement 0,6 de la longueur « A » dudit cadre (1) dudit siège (2) à partir du bord avant dudit siège (2) et ledit deuxième axe horizontal (15) est situé à une distance «b» comprise entre 0,05 et 0,15, avantageusement 0,1 de la longueur « B » dudit cadre de dossier (14) du dossier inclinable (3) à partir du bord inférieur dudit cadre de dossier (14) du dossier inclinable (3).
